Europäisches Patentamt

European Patent Office

Office européen des brevets

(11) Veröffentlichungsnummer: **0 147 672**
**A2**

(12) **EUROPÄISCHE PATENTANMELDUNG**

(21) Anmeldenummer: **84114645.9**

(22) Anmeldetag: **03.12.84**

(51) Int. Cl.⁴: **C 12 C 1/04**

(30) Priorität: **21.12.83 DE 3346245**

(43) Veröffentlichungstag der Anmeldung:
**10.07.85 Patentblatt 85/28**

(84) Benannte Vertragsstaaten:
**AT BE CH DE FR GB IT LI LU NL SE**

(71) Anmelder: **Air Fröhlich AG für Energierückgewinnung**
**Romanshorner Strasse 100**
**CH-9320 Arbon(CH)**

(72) Erfinder: **Frei, Willi**
**Höchster Strasse 11b**
**CH-9016 St. Gallen(CH)**

(74) Vertreter: **Füchsle, Klaus, Dipl.-Ing. et al,**
**Hoffmann . Eitle & Partner Patentanwälte**
**Arabellastrasse 4**
**D-8000 München 81(DE)**

(54) Einrichtung zum kontinuierlichen Mälzen von zerealem Korngut.

(57) Bei einer Einrichtung zum kontinuierlichen Mälzen von zerealem Korngut, bei der in einem Behandlungsraum mehrere kreisförmige Horden vertikal übereinander angeordnet sind, weist jeder Hordenboden (11) eine sich radial über diesen erstreckende Durchtrittsöffnung (12) für das Korngut auf, wobei die Durchtrittsöffnungen (12) sämtlicher Horden (10) fluchtend zueinander angeordnet sind. Unter der untersten Horde (10) ist eine Abräumschleuse (20) vorgesehen, durch deren Öffnen eine Absenkbewegung der Korngutsäule im Bereich der Öffnungen (12) in den Hordenböden (11) um eine Teilschicht bewirkbar ist. Jeder Horde (10) sind mehrere radial verlaufende Elemente (17) zugeordnet, die im Fall von drehbar ausgebildeten Horden (10) bei deren Drehen die Korngutschicht festhalten bzw. in dem Fall, in dem die Elemente selbst drehbar ausgebildet sind, bei deren Drehen die Korngutschicht gegenüber den Horden (10) mitbewegen.

FIG. 2

Einrichtung zum kontinuierlichen Mälzen von zerealem Korngut

Die Erfindung betrifft eine Einrichtung zum kontinuierlichen Mälzen von zerealem Korngut, bei der in einem Behandlungsraum mehrere kreisförmige Horden vertikal übereinander angeordnet sind, jeder Horde eine Abräumanordnung derart zugeordnet ist, daß bei einer Relativ-Drehbewegung zwischen der jeweiligen Horde und der zugeordneten Abräumanordnung von der auf dieser Horde befindlichen Korngutschicht eine zuunterst auf dem Hordenboden aufliegende Teilschicht abgetragen und diese auf die Korngutschicht der darunterliegenden Horde aufgebracht wird, und unterhalb der untersten Horde eine Abführanordnung vorgesehen ist.

Bei einer bekannten Einrichtung dieser Art (BE-PS 871 899) wird das Korngut in einem mehrere vertikal übereinander angeordnete, kreisförmige Horden aufweisenden Behandlungsraum zugeführt und in diesem Behandlungraum von oben nach unten bewegt. Hierzu ist jede der Horden drehbar angeordnet. Jeder der derart ausgebildeten Horde ist eine feststehende Ausräumschnecke und eine Verteilschnecke zugeordnet. Mittels der jeweiligen feststehenden Ausräumschnecke wird in Verbindung mit der zugeordneten drehbaren Horde von der darauf befindlichen Korngutschicht die unterste Teilschicht abgeräumt. Das Korngut dieser Teilschicht gelangt dann über einen außerhalb des Behandlungsraums liegenden Schacht zur Verteilschnecke der darunterliegenden Horde, mittels welcher das Korngut der geförderten Teilschicht wieder in den Behandlungsraum eingeführt und auf die Korngutschicht der darunterliegenden Horde aufgebracht wird.

Bei dieser bekannten Anlage erfolgt also das Abräumen der jeweiligen untersten Teilschicht der Korngutschicht jeder Horde und das Aufbringen des Korngutes dieser abgeräumten Teilschicht auf die Korngutschicht der am nächsten, darunterliegenden Horde auf relativ komplexe und aufwendige Weise. Jedem Hordenboden muß nämlich eine Ausräumschnecke, eine Verteilschnecke sowie ein außerhalb des Behandlungsraums verlaufender Schacht zugeordnet sein. Dabei sind die Ausräumschnecken und die Verteilschnecken nicht nur im Betrieb störungsanfällig; sie üben darüber hinaus auf das Korngut große mechanische Kräfte aus mit der Gefahr einer erheblichen Beschädigung des Kornguts, worunter natürlich die Qualität des hergestellten Malzes erheblich beeinträchtigt wird. Diese Beeinträchtigung wird verstärkt durch die Art der Führung des Korngutes in der bekannten Anlage. Bei der Drehung der Horde räumt die feststehende Ausräumschnecke die Teilschicht "linienförmig" im Verlauf einer kompletten Drehung, d.h. über eine gewisse Zeitspanne, ab. Die auf diese Weise abgetragene Teilschicht wird dann radial durch die Ausräumschnecke aus dem Behandlungsraum ausgebracht, axial über den zugehörigen Schacht eine Etage tiefer befördert und anschließend durch die Verteilschnecke radial wieder in den Behandlungsraum eingeführt und auf die Gutschicht der darunterliegenden Horde aufgebracht. Dies bedeutet, daß die Schichtung im Korngut zerstört wird und damit das Korngut im Verlauf der Beförderung durch den turmartigen Behandlungsraum nicht stets insgesamt den identischen Behandlungsbedingungen unterworfen wird mit der angesprochenen Folge, daß die Qualität des Malzes beeinträchtigt werden kann.

Demgegenüber ist es Aufgabe der Erfindung, eine Einrichtung der eingangs genannten Art zu schaffen, die bezüglich der Mechanik einfach und störunanfällig aufgebaut ist und bei der das Korngut äußerst gleichmäßig sowie schonend durch den Behandlungsraum geführt wird, so daß die gesamte Menge des Kornguts einer gleichbleibenden Behandlung unterzogen wird.

Diese Aufgabe wird durch die im Anspruch 1 beschriebene Einrichtung gelöst.

Bei der erfindungsgemäßen Einrichtung erfolgt also die Bewegung des Kornguts von Horde zu Horde in sektorenförmigen Teilschichten. Dabei kann die Bewegung des Kornguts auf zwei grundsätzliche Arten erfolgen. Nach dem ersten Fall sind die Horden drehbar ausgebildet, während die Elemente ortsfest angeordnet sind. Die ortsfesten Elemente halten beim gemeinsamen Drehen der Horden die darauf befindlichen Korngutschichten ortsfest, so daß sukzessive die sektorenförmigen Teilschichten durch die Durchtrittsöffnungen in den Hordenböden hindurchtreten und schließlich aufgrund entsprechender Betätigung in die Abräumschleuse eingebracht und von dort aus der Einrichtung abgezogen werden. Hierfür bewegt sich Abräumschleuse mit den Horden mit. Im zweiten Fall sind die Hordenböden ortsfest angeordnet, während die Elemente drehbar ausgebildet sind. Beim Drehen der Elemente werden
die Korngutschichten gegenüber den ortsfesten Horden
bewegt und auf diese Weise sukzessive die sektorenförmigen Teilschichten über die Durchtrittsöffnungen
in den Hordenböden gebracht, so daß sie auf die
nächstdarunterliegende Horde bzw. in die Abräumschleuse gelangen, die bei diesem Ausführungsbeispiel
natürlich ebenfalls ortsfest ist.

Der Transport der Teilschichten von Horde zu Horde
erfolgt durch Schwerkraft, wodurch sich ein einfacher
Aufbau der erfindungsgemäßen Einrichtung bezüglich
der Mechanik ergibt.

Durch die vertikalen Verbindungskanäle bewegen sich
die Teilschichten von Horde zu Horde in Art einer
vertikalen Säule. Das Korngut wird demnach keinem
freien Fall unterworfen, der ansonsten eine erhebliche Staubentwicklung bedingt. Bei der erfindungsgemäßen Horde erfolgt also der Transport des Kornguts
ohne Staubentwicklung und ohne mechanische Beschädigung. Zugleich ergibt sich eine exakte Führung der
von der jeweils oberen Horde abgeräumten sektorenförmig und unten liegenden Teilschicht der Korngutschicht auf dieser Horde zur nächsten darunterliegenden Horde.

Ferner ist die erfindungsgemäße Einrichtung äußerst
kompakt im Aufbau, insbesondere bezüglich der Höhe,
weil sämtliche Horden natürlich bis oben hin gefüllt
sind. Hierdurch erübrigen sich auch Nivelliergeräte
für die Nivellierung der Oberfläche des Korngutes in

-5-

der jeweiligen Horde, weil hierfür der Hordenboden der nächstoberen Horde oder bei größerem axialen Abstand der Horden eine obere Abdeckung, die jeder Horde zugeordnet ist, sorgt. Diese Tatsache trägt ebenfalls zu einer sehr gleichbleibenden Schichtung im Korngut bei.

Nach einer Weiterbildung der erfindungsgemäßen Einrichtung ist jede Horde kreisringförmig ausgebildet, während die Durchtrittsöffnung im jeweiligen Hordenboden kreisring-sektorenförmig ist. Hierdurch ergibt sich die beste geometrische Konfiguration für die erfindungsgemäße Einrichtung.

Es ist ferner von Vorteil, wenn der jeweilige Bogenabstand der Elemente der Bogenlänge der Durchtrittsöffnungen in den Hordenböden entspricht. Jeweils zwei benachbarte Elemente fluchten also mit den beiden radialen Rändern der Durchtrittsöffnungen in den Hordenböden, wenn die Durchtrittsöffnung des jeweiligen Hordenbodens unterhalb diesen zwei Abstreifelementen steht. Dadurch wird erreicht, daß exakt bemessene sektorenartige Teilschichten von der jeweiligen Horde abgeräumt und durch die Durchtrittsöffnung des Hordenbodens dieser Horde auf die nächste darunterliegende Horde aufgebracht werden.

Die unterhalb des untersten Hordenbodens angeordnete Abräumschleuse umfaßt vorteilhafterweise einen Aufnahmebehälter, dessen axialer Querschnitt der Form der Durchtrittsöffnung der untersten Horde entspricht und der durch zwei im axialen Abstand voneinander angeordnete Schieber in eine obere und eine untere Aufnahmekammer unterteilbar ist. Das Aufnahmevolumen jeder dieser Aufnahmekammern entspricht dabei dem Volumen der jeweils von den Horden abgeräumten sektorenartigen Teilschichten des Kornguts.

Die erfindungsgemäße Einrichtung kann als komplette Mälzerei mit Abschnitten für das Weichen, das Keimen und das Darren der Gerste ausgebildet sein. Sie kann aber auch ausschließlich als Darr-Anordnung dienen.

Sie wird bevorzugt für einen kleineren bis mittleren Durchsatz eingesetzt.

Die Erfindung wird im folgenden anhand der beigefügten Zeichnungen weiter erläutert. Es zeigt:

Fig. 1 eine Draufsicht auf den Boden einer erfindungsgemäß ausgebildeten Horde,

Fig. 2 einen Vertikalschnitt durch die erfindungsgemäße Einrichtung entsprechend der Schnittlinie II-II der Fig. 1, bei welcher die Horden gedreht werden, und

Fig. 3 eine schematische Erläuterung des Transports des Kornguts durch die erfindungsgemäße Einrichtung, bei der die sogenannten Elemente gedreht werden.

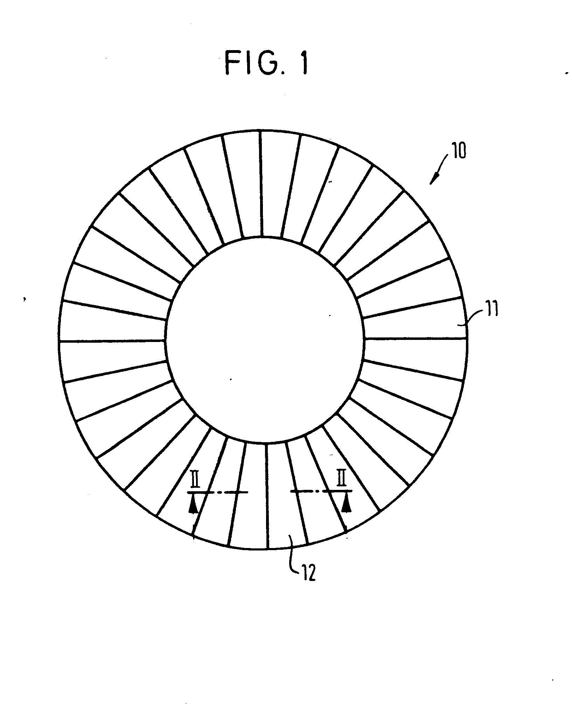

Gemäß der schematischen Darstellung der Fig. 1 weist jede insgesamt mit 10 bezeichnete Horde, die in an sich bekannter und üblicher Weise ausgebildet und bei einer ersten Ausführungsform in ebenfalls an sich bekannter Weise um ihre Achse drehbar ist, einen kreisringförmigen Hordenboden 11 auf. In diesem Hordenboden ist eine kreisring-sektorenförmige Durchtrittsöffnung 12 für das Korngut angeordnet. Die sektorenförmige Durchtrittsöffnung 12 nimmt dabei z.B. 1/32 der Fläche des Hordenbodens 11 ein.

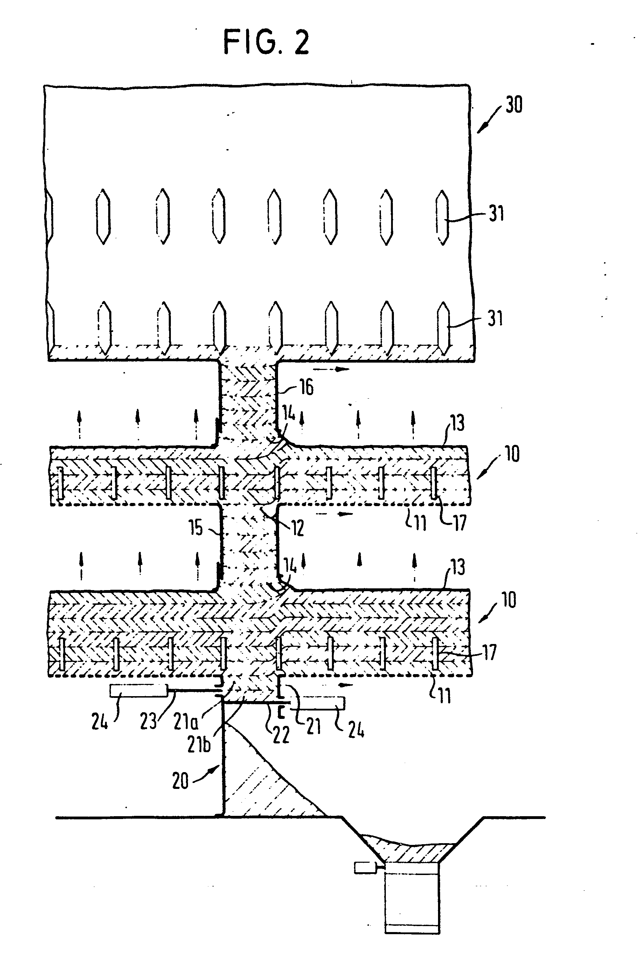

Nach Fig. 2 sind mehrere derartige Horden 10 im gezeigten Beispiel zwei vertikal und axial fluchtend übereinander in einem nicht dargestellten Behandlungsraum angeordnet. Sie sind synchron um ihre gemeinsame Achse drehbar. Wie sich ferner aus Fig. 2 ergibt, besitzt jede Horde 10 eine obere Abdeckung 13. Die sektorenförmigen Durchtrittsöffnungen 12 sind zueinander axial fluchtend angeordnet, wobei jede Abdeckung 13 eine ebenfalls zu den Durchtrittsöffnungen 12 fluchtende und eine entsprechende Form aufweisende Verbindungsöffnung besitzt. Die Durchtrittsöffnung 12 der oberen Horde 10 ist über einen Verbindungskanal 1 mit der Verbindungsöffnung 14 der oberen Abdeckung 13 der darunterliegenden Horde 10 und damit mit deren Durchtrittsöffnung 12 verbunden. Die Verbindungsöffnung 14 in der oberen Abdeckung 13 der oberen Horde 10 ist über einen Verbindungskanal 16 mit einem sogenannten Tagestank 30 verbunden. In diesem Tagestank ist die Menge an Korngut gespeichert, die in einem Tag in der darunterliegenden Einrichtung, im vorliegenden Fall einer Darre, verarbeitet wird. Damit in diesem Tagestank 30 das Korngut relativ locker gespeichert ist und auf diese Weise mit Luft oder einem anderen Behandlungsmedium gut zugänglich konditioniert werden kann, sind im Tagestank 30 mehrere Reihen von Stützprofilen 31 vorgesehen, die eine Stützwirkung auf das Korngut ausüben und aus diesem Grund in einem derartigen horizontalen Abstand zueinander angeordnet sind, daß das Korngut zwischen den Stützprofilen 31 einer Art Brückenbildung unterliegt.

Oberhalb der Hordenböden 11 der Horden 10 sind radial
verlaufende Elemente 17 in Form geeigneter Profile,
z.B. Flachprofile, angeordnet. Die untere Kante jedes
Elements kann relativ nahe an dem zugehörigen Hordenboden 11 liegen, während die axiale Höhe des jeweiligen Elements 17 so bemessen ist, daß die Elemente
beim Drehen der Horden 10 die darauf befindlichen
Korngutschichten ortsfest halten, so daß durch die
Durchtrittsöffnung 12 Horden 10 sukzessive Teilschichten des Kornguts durch die Durchtrittsöffnungen
12 hindurchtreten können und auf die Weise von Horde
zu Horde transportiert werden. Der Bogenabstand
zweier benachbarter Elemente 17 kann der Bogenlänge
der Durchtrittsöffnungen 12 in den Hordenböden 11
entsprechen. Dies bedeutet, daß die radialen Ränder
der Durchtrittsöffnung 12, die unter zwei benachbarte
Elemente 17 beim Drehen der jeweiligen Horde gebracht
worden sind, mit den Elementen 17 fluchten. Auf diese
Weise wird exakt die gewünschte Teilschicht, die
zwischen zwei Elementen 17 und über der jeweiligen
Durchtrittsöffnung 12 liegt, beim weiteren Drehen der
betrachteten Horde durch diese Durchtrittsöffnung 12
gefördert.

Die Durchtrittsöffnung 12 der untersten Horde 10
liegt über einer insgesamt mit 20 bezeichneten Abräumschleuse. Diese Abräumschleuse umfaßt einen Aufnahmebehälter 21, der mit einem unteren, horizontal
ausgerichteten Schieber 22 und einem oberen, ebenfalls horizontal verlaufenden Schieber 23 versehen ist. Die Schieber sind z.B. durch Druckluftzylinder 24 betätigbar. Durch die beiden im axialen Abstand voneinander angeordneten Schieber 22 und 23 ist der Aufnahmebehälter 21 in eine obere Aufnahmekammer 21a und eine untere Aufnahmekammer 21b unterteilbar. Der Aufnahmebehälter 21 besitzt einen axialen, d.h. horizontalen Querschnitt, der der Form der Durchtrittsöffnung 12 im Boden 11 der Horde 10 entspricht. Das jeweilige Volumen der Aufnahmekammern 21a und 21b entspricht dem Volumen der Teilschicht, die jeweils durch die Abstreifelemente 17 von der untersten Horde in die obere Aufnahmekammer 21a eingeführt wird.

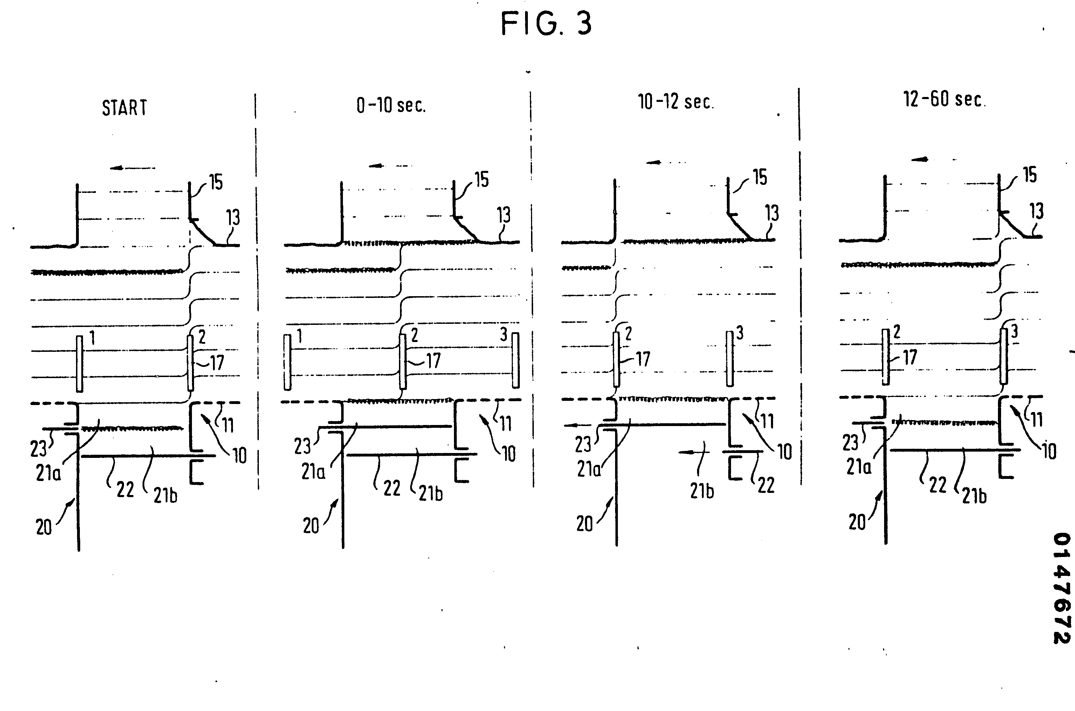

Aus Fig. 3 ergibt sich augenscheinlich, wie der Transport des Korngutes von der oberen Horde 10 auf die untere Horde 10, welche dargestellt ist, und von dort in die Abräumschleuse folgt, und zwar für den zweiten Fall, in dem die Elemente 17 gedreht werden, während die Horden 10 ortsfest bleiben. Dabei sind die Elemente 17 mit 1, 2 und 3 zusätzlich bezeichnet, um den Bewegungsablauf der Korngutschichten zu illustrieren.

Gemäß der Darstellung in Fig. 3, die mit "Start" bezeichnet ist, sind sowohl der Verbindungskanal 1 zwischen der oberen und der unteren Horde 10 als auch die untere Horde 10 voll mit Korngut gefüllt. Ein gleiches gilt für jede der Horden 10. In das Korngut sind horizontal verlaufende Schichtlinien eingezeichnet, die den Bewegungsablauf weiter verdeutlichen. Ebenfalls mit Korngut gefüllt sind die obere Aufnahmekammer 21a und die untere Aufnahmekammer 21b der Abräumschleuse. Die Elemente 17 drehen sich in Pfeilrichtung.

Wie sich aus den Bildern "Start", "0-10 sek." und "10-12 sek." ergibt, drehen sich die Elemente 17 in Pfeilrichtung, so daß zuerst die Elemente 1 und 2 über der Abräumschleuse 20 liegen, während dann die Elemente 2 und 3 in diesem Bereich bewegt werden. Durch dieses Drehen der Elemente 17 wird das gesamte Korngut der Horde 10 bewegt. Dadurch wird auch die der Horde 10 zu entnehmende Teilschicht über die offene obere Aufnahmekammer 21 der Abräumschleuse 20 gebracht und in diese eingeführt. Dementsprechend sinkt das Korngut zwischen den mit 2 und 3 bezeichneten Elementen um diese Teilschicht nach unten, wodurch von der oberen Horde durch den Verbindungskanal 1 eine entsprechende Teilschicht nachrutschen kann. Zur gleichen Zeit kann durch Öffnen des unteren Schiebers 22 die in der unteren Aufnahmekammer 21b befindliche Korngutmenge, die vor dem geschilderten Schritt in diese eingebracht worden ist, abgezogen und z.B. der Kühlvorrichtung zugeleitet werden. Der Transport der zuerst in der oberen Aufnahmekammer 21a befindlichen Korngutmenge in die untere Aufnahmekammer 21b erfolgt während der Drehbewegung der Elemente, und zwar von der Stellung 1, 2 zu der Stellung 2, 3.

Auf diese Weise wird eine Art Säulenausräumung bezüglich sämtlicher übereinander angeordneter Horden erreicht. Dabei bleiben die Schichtungen, wie sich aus Fig. 3 ergibt, im wesentlichen ungestört. Dadurch werden benachbarte Korngutanteile einer identischen Behandlung unterworfen mit der Folge einer hohen Qualität des derart hergestellten Malzes.

-11- **0147672**

Patentansprüche:

1. Einrichtung zum kontinuierlichen Mälzen von
   zerealem Korngut, bei der

   - in einem Behandlungsraum mehrere kreisförmige
     Horden vertikal übereinander angeordnet sind,

   - jeder Horde eine Abräumanordnung derart zugeordnet ist, daß bei einer Relativ-Drehbewegung
     zwischen der jeweiligen Horde und der zugeordneten Abräumanordnung von der auf dieser Horde
     befindlichen Korngutschicht eine zuunterst auf
     dem Hordenboden aufliegende Teilschicht abgetragen und diese auf die Korngutschicht der
     darunterliegenden Horde aufgebracht wird, und

   - unterhalb der untersten Horde eine Abführanordnung vorgesehen ist,

   dadurch gekennzeichnet, daß

   - jeder Hordenboden (11) eine sich über dessen
     gesamten Radius erstreckende Durchtrittsöffnung
     (12) für Korngut aufweist, die Durchtrittsöffnungen (12) sämtlicher Horden (10) fluchtend
     zueinander angeordnet sind und durch vertikal
     verlaufende Verbindungskanäle (15) so miteinander verbunden sind, daß eine durchgehende Korngutsäule sich ausbildet,

   - unter der Durchtrittsöffnung der untersten
     Horde eine Abräumschleuse (20) angeordnet ist,

**0147672**

durch deren Öffnen eine Absenkbewegung der Korngutsäule im Bereich der Öffnungen in den Hordenböden um eine Teilschicht bewirkbar ist, und

- die jeder Horde (10) zugeordnete Abräumanordnung durch mehrere radial verlaufende Elemente (17) gebildet ist, die im Fall von drehbar ausgebildeten Horden bei deren Drehen die Korngutschicht festhalten bzw. in dem Fall, in dem die Elemente selbst drehbar ausgebildet sind, bei deren Drehen die Korngutschicht gegenüber den Horden mitbewegen.

2. Einrichtung nach Anspruch 1, dadurch gekennzeichnet, daß jede Horde (10, 11) kreisringförmig ausgebildet ist.

3. Einrichtung nach einem der vorhergehenden Ansprüche, dadurch gekennzeichnet, daß die Durchtrittsöffnung (12) im jeweiligen Hordenboden (11) sektorenförmig ist.

4. Einrichtung nach einem der vorhergehenden Ansprüche, dadurch gekennzeichnet, daß der jeweilige Bogenabstand der Elemente (17) der Bogenlänge der Durchtrittsöffnungen (12) in den Hordenböden (11) entspricht.

5. Einrichtung nach einem der vorhergehenden Ansprüche, dadurch gekennzeichnet, daß die Abräumschleuse (20) einen Aufnahmebehälter (21) umfaßt, dessen axialer Querschnitt der Form der Durchtrittsöffnung (12) der untersten Horde (10) entspricht und der durch zwei im axialen Abstand voneinander angeordnete Schieber (22, 23) in eine obere und eine untere Aufnahmekammer (21a, 21b) unterteilbar ist.

FIG. 1

# FIG. 2

0147672

FIG. 3